# EUROPÄISCHE PATENTSCHRIFT

(11) **EP 2 525 888 B1**
(45) Veröffentlichungstag und Bekanntmachung des Hinweises auf die Patenterteilung: **08.04.2015**
(21) Anmeldenummer: 10795934.8
(22) Anmeldetag: 08.12.2010
(51) Int. Cl.: B01D 29/11, B29C 65/16

(54) **LEITFÄHIGES FILTERELEMENT SOWIE FILTERVORRICHTUNG MIT FILTERELEMENT**
CONDUCTIVE FILTER ELEMENT AND FILTER DEVICE HAVING A FILTER ELEMENT
ÉLÉMENT FILTRANT CONDUCTEUR ET DISPOSITIF DE FILTRATION COMPRENANT UN ÉLÉMENT FILTRANT

(30) Priorität: 23.01.2010 DE 102010005541
(43) Veröffentlichungstag der Anmeldung: 28.11.2012
(73) Patentinhaber: HYDAC FILTERTECHNIK GMBH, 66280 Sulzbach/Saar (DE)
(72) Erfinder: GALIFI, Giuseppe, 66125 Saarbrücken (DE); MEES, Harald, 66822 Lebach (DE)
(74) Vertreter: Bartels, Martin Erich Arthur
(86) Internationale Anmeldenummer: PCT/EP2010/007449
(87) Internationale Veröffentlichungsnummer: WO 2011/088869

(56) Entgegenhaltungen:
- EP-A1- 1 710 007
- WO-A1-2006/056533
- WO-A1-2007/054262
- DE-A1- 10 058 251
- DE-A1- 10 138 073
- DE-A1- 19 519 481
- DE-A1-102007 006 004
- DE-A1-102007 013 178

## Beschreibung

Die Erfindung betrifft ein Filterelement mit den Merkmalen im Oberbegriff von Anspruch 1 sowie eine Filtervorrichtung mit einem derartigen Filterelement..

Filterelemente sind in vielen Gebieten der Technik für die Filtration von unterschiedlichsten Fluiden im Einsatz. Beispiele derartiger Fluide sind Hydraulikflüssigkeiten, Schmierstoffe und Kraftstoffe. Beim Durchströmen des Fluids durch ein Filtermedium des Filterelements kann eine elektrische Spannung aufgebaut werden, die in ungünstigen Fällen einen Wert annehmen kann, der zu einer zumindest teilweisen Zerstörung des Filtermediums oder gar des Filterelements führt. Dies kann insbesondere dann eintreten, wenn die bei Ausbildung der Spannung auftretenden Ladungen nicht in geeigneter Weise von dem Filterelement abgeführt werden können. Um dem Problem des Entstehens der erwähnten Spannungen entgegenzutreten, ist es bekannt, das Filtermedium beispielsweise durch das Einbringen von leitfähigen Drähten mit einer gewissen Leitfähigkeit zu versehen und über geeignete, in der Regel metallische weitere Filterelementkomponenten eine Ableitung von sich am Filtermedium ansammelnden Ladungen herbeizuführen. Eine weitere Forderung an derartige Filterelemente ist, dass diese kostengünstig und in großen Stückzahlen herstellbar sein sollen. Um der letztgenannten Forderung gerecht zu werden, hat sich bewährt, die einzelnen Komponenten eines Filterelements beispielsweise durch Kleben miteinander zu verbinden. Bekannte Lösungen sind jedoch oftmals kostenintensiv und stellen aufgrund der verwendeten Materialvielfalt ein nicht unerhebliches Recycling-Problem dar.

DE 10 2007 013 178 A1 offenbart ein Verfahren zum Herstellen eines Filterelements der eingangs genannten Art mit den Schritten: Vorsehen eines Filtermediums, das einen inneren Filterhohlraum umgibt und ein heißsiegelbares Material enthält; Vorsehen zumindest einer einen Abschluss des Filterhohlraumes an zumindest einem Ende bildenden Endkappe aus thermoplastischem, laserdurchlässigem Kunststoffmaterial; Ausbilden einer laserundurchlässigen Sperrschicht zwischen Endkappe und angrenzendem Ende des Filtermediums; Verschweißen von Endkappe und Filtermedium, indem an die Sperrschicht angrenzendes laserdurchlässiges Material mit Laserenergie derart durchstrahlt wird, dass durch Erhitzen des an die Sperrschicht angrenzenden Bereiches ein Schweißvolumen als Fügeelement für die durch Laser-Durchstrahlschweißen erzeugte Schweißverbindung zur Verfügung gestellt wird. Zur Bildung der Sperrschicht kann eine laserundurchlässige Schweißfolie zwischen Endkappe und angrenzendes Ende des Filtermediums eingelegt werden.

Dadurch, dass die Filterelementkomponenten durch ein Durchstrahlschweißverfahren mittels Laserlicht verbunden werden, ist eine kostengünstige Fertigung gewährleistet. Bekannt ist es, Filterelemente mit einem Epoxidharzklebstoff zu fügen. Dieses Verfahren weist aber gegenüber dem Durchstrahlschweißen mittels Laser mehrere Nachteile auf. Z.B. benötigt man bei diesem Verfahren einen hohen Platzbedarf für Reaktionsspeicher, Lagerflächen für die geklebten Filterelemente und Kleber. Zudem ist dieses. Verfahren sehr zeitaufwendig, so dass sich entsprechend hohe Herstellungskosten ergeben. Die Vorteile beim Durchstrahlschweißen mittels Laser liegen in der geringen thermischen und mechanischen Belastung der zu verbindenden zuordenbaren Filterelementkomponenten sowie in seiner Flexibilität, Automatisierbarkeit und Integrationsfähigkeit in bestehende Fertigungsabläufe. Unter Beachtung des finanziellen Aspektes entfallen bei diesem Verfahren Kosten für Klebstoff, Reaktionsspeicher, Reinigungskosten und Wartungskosten, wie sie beim Kleben anfallen. Auch ergeben sich beim Durchstrahlschweißen mittels Laser kürzere Zykluszeiten.

Die WO 2006/056533 A1 beschreibt einen Filter mit einer Endscheibe aus einem elektrisch leitenden Kunststoff, wobei die Leitfähigkeit des Kunststoffs durch eine Dotierung mit elektrisch leitenden Materialien, insbesondere Carbonfasern, erreicht wird.

Ausgehend von diesem Stand der Technik liegt der Erfindung die Aufgabe zugrunde, ein Filterelement sowie eine Filtervorrichtung mit einem derartigen Filterelement bereitzustellen, das neben einer kostengünstigen Fertigung auch eine zuverlässige Funktion des Filterelements gewährleistet, insbesondere den Aufbau von Spannungen an Komponenten des Filterelements vermeidet, die zu dessen Zerstörung führen können.

Diese Aufgabe ist durch ein Filterelement mit den Merkmalen des unabhängigen Patentanspruchs 1 in ihrer Gesamtheit sowie durch eine Filtervorrichtung mit den Merkmalen des Patentanspruchs 10 in ihrer Gesamtheit gelöst.

Dadurch, dass diese eine Komponente des Filterelements, die beim Durchstrahlschweißverfahren dem Laserlicht exponiertist, zumindest teilweise elektrisch leitfähig ist, wobei zur Ausbildung der mindestens teilweisen elektrischen Leitfähigkeit diese Filterelementkomponente zumindest bereichsweise aus einem Additive in Form von Carbon-Nanotubes und/oder Carbonfasern und/oder Stahlfasern aufweisenden Kunststoffmaterial gebildet ist, kann eine sichere Ableitung von am Filtermedium entstehenden Ladungen vorgenommen werden. Die dahingehenden Additive weisen den Vorteil auf, dass sie sich in einfacher Weise mit den beim Herstellen eines Filterelements bzw. einer Filtervorrichtung verwendeten Kunststoffen kombinieren lassen. Geeignete Ausgangsstoffe für die Hinzufügung von den dahingehenden Additiven bilden beispielsweise Polystyrol (PS), Polyamid (PA), Poybutylenterephthalat (PBT), Styrol-Acrylnitril (SAN), Polyethersulfon (PES), Acrylnitril-Butadien-Styrol (ABS), eine Kombination aus PC und ABS, eine Kombination aus PMMA und ABS oder copolymeres Polyacetal (POM). Als weiteres Additiv haben sich auch Kohlenstofffasern bewährt.

Bei einer Ausführungsform des erfindungsgemäßen Filterelements erzeugt die Sperrschicht durch Absorption von Laserlicht Wärme und dient zumindest teilweise als Verbindung gegenüber benachbart angrenzenden weiteren Filterelementkomponenten. Hierbei kommt es entweder zu einem nur oberflächlichen oder vollständigen Aufschmelzen der Sperrschicht, und durch Wärmeübertragung zu benachbart angrenzenden weiteren Filterelementkomponenten werden auch diese zumindest bereichsweise aufgeschmolzen und können dergestalt eine Verbindung untereinander oder mit der Sperrschicht durch Schweißen eingehen.

Bei einer Ausführungsform des erfindungsgemäßen Filterelements ist die Sperrschicht zumindest teilweise elektrisch leitfähig. Durch die zumindest teilweise elektrisch leitfähige Ausführung der Sperrschicht können Ladungen von Filterelementkomponenten, die über die Sperrschicht verbunden sind, abgeführt werden.

Bei einer Ausführungsform des erfindungsgemäßen Filterelements ist die Sperrschicht in Art einer Folie ausgebildet zwischen den mittels dem Durchstrahlschweißverfahren mittels Laserlicht zu verbindenden Filterelementkomponenten eingelegt. Insbesondere durch die Verwendung von Folien mit einer Dicke von unter 0,2 mm und bevorzugt von ungefähr 0,05 mm für die Sperrschicht passt sich die dahingehende Folie in einfacher Weise den Konturen der zu verbindenden Filterelementkomponenten, zwischen welche sie eingelegt ist, an.

Bei einer Ausführungsform des erfindungsgemäßen Filterelements ist das Filtermedium zur Ableitung von Ladungen zumindest teilweise elektrisch leitfähig. Dergestalt können Ladungen, die beim Durchströmen eines Fluids durch das Filtermedium an diesem entstehen, an benachbarte und ebenfalls zumindest teilweise elektrisch leitfähige Filterelementkomponenten weitergegeben werden, so dass das Entstehen von Spannungen, die zu einer Zerstörung des Filtermediums führen könnten, wirksam vermieden ist. Hierzu kann zum einen ein herkömmliches Filtermedium von leitfähigen Drähten, Fasern oder auch Geweben durchsetzt sein, zum anderen kann jedoch auch das Material des Filtermediums selbst durch geeignete Additive bereits bei seiner Herstellung zumindest teilweise elektrisch leitfähig ausgeführt werden.

Bei einer Ausführungsform des erfindungsgemäßen Filterelements bildet eine Filterelementkomponente in der Art einer Endkappe einen Abschluss des Filterelements an zumindest einem Ende und ist aus zumindest teilweise Laserlicht durchlässigem Material bestehend beim Durchstrahlschweißverfahren dem Laserlicht exponiert. Die Endkappe an dem zumindest einen Ende des Filterelements bildet zum einen einen Abschluss des Filterelements, jedoch auch eine Einfassung für das Filtermedium an seiner Stirnseite.

Bei einer Ausführungsform des erfindungsgemäßen Filterelements ist die Endkappe zumindest teilweise elektrisch leitfähig. Die Endkappe als Abschluss des Filterelements kann ein- oder mehrteilig, insbesondere ein-, zwei- oder dreiteilig ausgeführt sein, wobei mindestens einer der Teile der Endkappe bei dieser Ausführungsform zumindest teilweise elektrisch leitfähig ausgeführt ist, so dass von dem Filtermedium abgeführte Ladungen bis zu dem äußeren Abschluss des Filterelements weiterleitbar sind. Darüber hinaus kann des Weiteren vorgesehen sein, dass zumindest Teile der dahingehenden Endkappe Anschlusseinrichtungen aufweisen, die der Zu- bzw. Abfuhr von zu reinigenden bzw. gereinigten Fluiden dienen. Bei einer bevorzugten Ausführungsform weisen die dahingehenden Anschlusseinrichtungen auch mindestens einen Aufnahmeraum für ein Dichtmittel auf. Insbesondere kann ein derartiger Aufnahmeraum in Form einer Ausnehmung für einen O-Ring vorgesehen sein.

Bei einer Ausführungsform des erfindungsgemäßen Filterelements ist zur Ausbildung des zumindest teilweise laserlichtundurchlässigen Materials mindestens eine der Filterelementkomponenten zumindest bereichsweise aus einem ein Additiv in Form von Glasfasern aufweisenden Kunststoffmaterial gebildet. Bereits eine geringe Beimengung von Glasfasern in das Kunststoffmaterial bedingt eine Verringerung der Transmission von Laserlicht durch das dahingehende Material und eine Erhöhung der Absorption des Laserlichts, wodurch bei einem derartig aufbereiteten Kunststoffmaterial bevorzugt eine Umsetzung der Energie des Laserlichts in Wärme erfolgt.

Geeignete Laser für das Durchstrahlschweißverfahren mittels Laserlicht sind beispielsweise Festkörperlaser wie Nd:YAG-Laser mit einer Wellenlänge von 1064 nm sowie Hochleistungsdiodenlaser mit Wellenlängen im Bereich von 800 nm bis 1000 nm.

Bei einer Ausführungsform der erfindungsgemäßen Filtervorrichtung weist diese ein erfindungsgemäßes Filterelement sowie mindestens eine zumindest teilweise elektrisch leitfähige Elementaufnahme auf, die fluiddicht mit mindestens einer Filterelementkomponente des Filterelements verbindbar ist und die elektrisch leitfähig mit mindestens einer Filterkomponente des Filterelements verbindbar ist. Durch die elektrisch leitfähige Verbindung der Elementaufnahme der Filtervorrichtung mit dem Filterelement können aus dem Filterelement abzuführende Ladungen über die Elementaufnahme und damit von der Filtervorrichtung abgeleitet werden.

Nachstehend ist die Erfindung anhand von in den Zeichnungen dargestellten Ausführungsbeispielen im Einzelnen erläutert. Es zeigen:
- Fig. 1: eine stark vereinfachte schematische Darstellung zur Erläuterung des Durchstrahlschweißverfahrens mittels Laserlicht;
- Fig. 2: eine weitere stark vereinfachte schematische Darstellung zur Erläuterung des Durchführens des Durchstrahlschweißverfahrens mittels Laserlicht;
- Fig. 3: einen Längsschnitt eines Ausführungsbeispieles eines erfindungsgemäßen Filterelements;
- Fig. 4: eine teilweise geschnittene Ansicht eines weiteren Ausführungsbeispieles eines erfindungsgemäßen Filterelements;
- Fig. 5: eine teilweise geschnittene Ansicht eines weiteren Ausführungsbeispieles eines erfindungsgemäßen Filterelements;
- Fig. 6: eine teilweise geschnittene Ansicht eines weiteren Ausführungsbeispieles eines erfindungsgemäßen Filterelements;
- Fig. 7: eine teilweise geschnittene Ansicht eines weiteren Ausführungsbeispieles eines erfindungsgemäßen Filterelements;
- Fig. 8: eine teilweise geschnittene Ansicht eines weiteren Ausführungsbeispieles eines erfindungsgemäßen Filterelements;
- Fig. 9: eine erste Ausführungsform einer Elementaufnahme einer erfindungsgemäßen Filtervorrichtung; und
- Fig. 10: eine zweite Ausführungsform einer Elementaufnahme einer erfindungsgemäßen Filtervorrichtung.

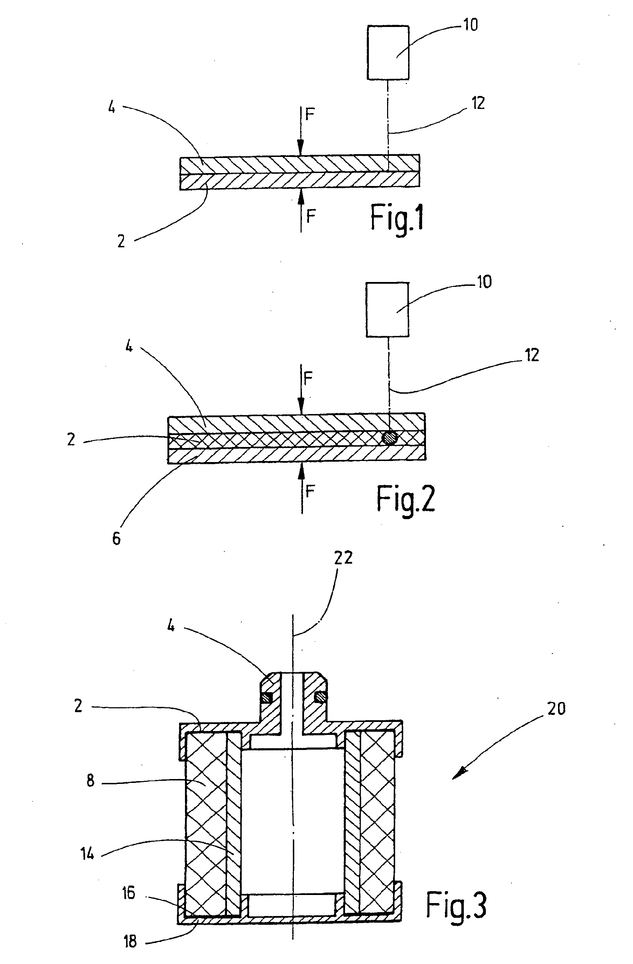

Gemäß Fig. 1 durchdringt beim Durchstrahlschweißverfahren mittels Laserlicht das Laserlicht 12 einer Laserlichtquelle 10 eine zumindest teilweise laserlichtdurchlässige Komponente 4, bevor das Laserlicht 12 auf eine zumindest teilweise laserlichtundurchlässige Komponente 2 trifft. Durch Absorption des Laserlichtes 12 an der Oberfläche der Komponente 2 wird dort Wärme erzeugt, so dass die Oberfläche in den betreffenden Bereich anschmilzt, wobei die Wärmeenergie auch an die Unterseite der Komponente 4 gemäß Darstellung in Fig. 1 weitergeleitet wird und dergestalt mittels eines vordefinierten Fügedrucks F beim Erstarren der Schmelze von der Komponente 2 und der Komponente 4 eine gewünschte Schweißverbindung der beiden Komponenten entsteht.

Bei der zumindest teilweise laserlichtundurchlässigen Komponente 2 kann es sich beispielsweise um eine Platte, Scheibe oder Folie handeln, die beim Schweißprozess entweder oberflächlich oder vollständig aufgeschmolzen wird. Bei der Darstellung in Fig. 1 ist die Komponente 2 plattenförmig ausgeführt, während bei der Darstellung nach Fig. 2 z. B. zum Fügen von zwei Komponenten 6 und 4 die Komponente 2 in Form einer Folie ausgeführt beim Durchstrahlschweißen vollständig aufgeschmolzen wird. Sofern die Komponenten 2, 4 und 6 zumindest teilweise elektrisch leitfähig ausgeführt sind, kann eine elektrische Ladung von der Komponente 4 zur Komponente 2 und/oder zur Komponente 6 bzw. umgekehrt abgeführt werden.

Ein laserlichtdurchlässiger und gleichzeitig elektrisch leitfähiger Kunststoff lässt sich beispielsweise dadurch herstellen, dass Additive in Form einer bestimmten Menge von Carbon-Nanotubes (CNTs) und/oder Carbonfasern in den Grundwerkstoff des Kunststoffs eine ausreichend elektrische Leitfähigkeit bewirken und für den Laser das Material in einem bestimmten Laserwellenlängenbereich transparent wirkt.

Ein in der Fig. 3 im Längsschnitt dargestelltes Ausführungsbeispiel eines erfindungsgemäßen Filterelements 20 ist im Wesentlichen rotationssymmetrisch zu einer zentralen Achse 22 aufgebaut und setzt sich aus einzelnen Komponenten wie einem Filtermedium 8 als die eine Komponente und weiterer Filterelementkomponenten 2, 4, 14, 16 und 18 zusammen. Zum Durchführen eines Durchstrahlschweißverfahrens mittels Laserlicht 12 zwecks Verbinden von zuordenbaren Filterelementkomponenten miteinander besteht zumindest eine Komponente 4 aus zumindest teilweise Laserlicht 12 durchlässigem und mindestens eine weitere Komponente 2 in der Art einer Sperrschicht ausgebildet aus zumindest teilweise Laserlicht 12 undurchlässigem Material, wobei ein Teil der Komponenten des Filterelements, die beim Durchstrahlschweißverfahren dem Laserlicht 12 exponiert sind, zumindest teilweise elektrisch leitfähig ist. Bei der in Fig. 3 gezeigten Ausführungsform ist beispielhaft die Komponente 4 des Filterelements 20 zumindest teilweise elektrisch leitfähig ausgeführt. Die Sperrschicht 2 erzeugt durch Absorption von Laserlicht Wärme und dient dergestalt zumindest teilweise als Verbindung gegenüber benachbart angrenzenden weiteren Filterelementkomponenten wie der Komponente 4, dem Filtermedium 8 und einem Stützrohr 14. An dem mit Sicht auf Fig. 3 unteren Ende des Filterelements 20 ist zwischen dem Stützrohr 14, dem Filtermedium 8 und einem unteren Abschtuss 18 eine weitere laserlichtundurchlässige Komponente 16 in der Form einer weiteren Sperrschicht 16 angeordnet. Dergestalt kann auch in diesem Bereich ein Verbinden von zugeordneten Filterelementkomponenten miteinander erfolgen.

Bei einer Ausführungsform des erfindungsgemäßen Filterelements 20 ist die Sperrschicht 2 und/oder 16 zumindest teilweise elektrisch leitfähig, so dass diese zum Transport von Ladungen geeignet ist.

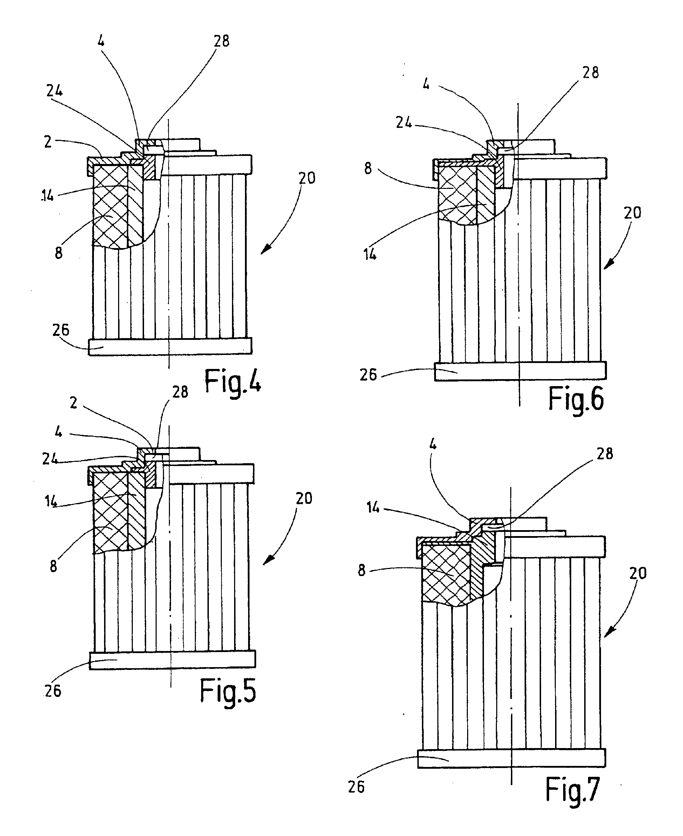

Die Figuren 4 und 5 zeigen jeweils eine teilweise geschnittene Ansicht weiterer Ausführungsbeispiele des erfindungsgemäßen leitfähigen Filterelements 20, die konstruktiv so gestaltet sind, dass eine elektrische Leitfähigkeit gegeben ist und mit dem Durchstrahlschweißverfahren mittels Laserlicht gefügt werden kann. Bei den hier gezeigten Ausführungsformen kommen Kunststoffmaterialien für die Komponenten zum Einsatz, die jeweils nicht gleichzeitig leitfähig und transparent für Laserlicht sein müssen.

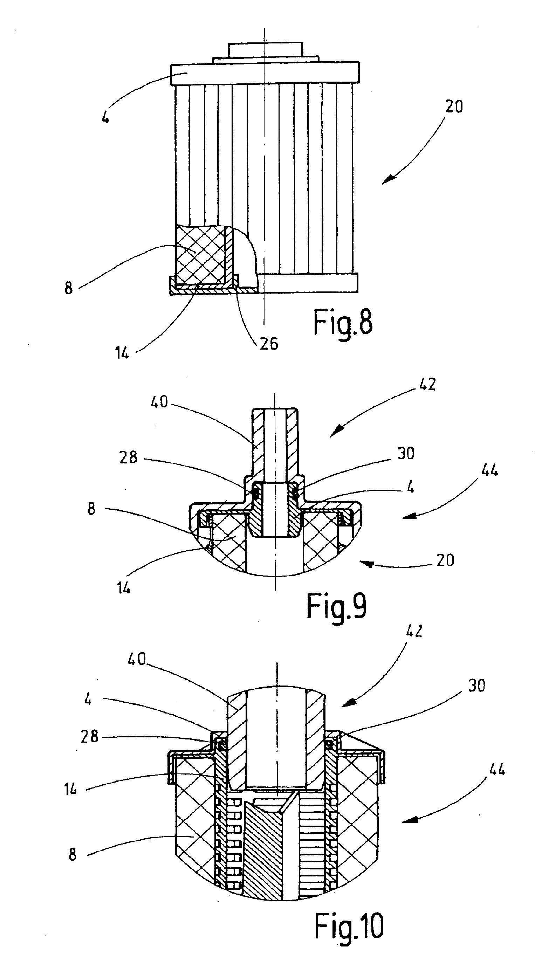

Gemäß Fig. 4 ist eine elektrisch leitfähige absorbierende Sperrschicht 2 als Zusatzteil zwischen einer lasertransparenten Endkappe, dem Filtermedium 8 und dem Stützrohr 14 gelegt. Die Endkappe 4 ist zweiteilig aufgebaut und besitzt einen aus einem elektrisch leitfähigen Kunststoff gefertigten Innenring 24, der elektrische Ladung an einen leitenden Stutzen 40 (s. Fig. 10) einer Elementaufnahme 42 (s. Fig. 10) ableiten kann. Der Innenring 24, die Sperrschicht 2, das Stützrohr 14 sowie das Filtermedium 8 sind aus elektrisch leitfähigem Kunststoff hergestellt. Die mit Blick auf Fig. 4 untere Endkappe 26 kann aus Kostengründen aus nicht elektrisch leitfähigem Kunststoff bestehen, muss aber dem Laser gegenüber transparent sein.

Die Sperrschicht 2 ist hierbei in Art einer Folie ausgebildet.

Gemäß dem Ausführungsbeispiel in Fig. 5 wird eine dreiteilige, vorzugsweise gespritzte, O-Ringkappe für die laserlichtdurchlässige Komponente 4 verwendet. Die O-Ringkappe wird mit einer Sperrschicht 2 ausgeführt, die im 2-Komponenten-Spritzgussverfahren aufgespritzt oder als separates Teil eingesetzt ist. Der Innenring 24 bildet den dritten Teil der O-Ringkappe. Durch Einstecken des Innenrings 24 in die O-Ringkappe entsteht ein Aufnahmeraum 28 für einen O-Ring. Am Filtermedium 8 entstehende Ladung wird von dem Filtermedium 8 zum Stützrohr 14 über den Innenring 24 an den leitenden Elementstutzen 40 der Elementaufnähme 42 (s. Fig. 10) abgeleitet. Daher sind die Komponenten 2, 24, 14 und 8 aus einem elektrisch leitfähigen Kunststoff hergestellt. Die mit Sicht auf Fig. 5 obere Komponente 4 der O-Ringkappe ist aus einem lasertransparenten Kunststoff hergestellt sein, so dass das Laserlicht 12 zur laserlichtundurchlässigen Komponente 2 des Filterelements gelangen kann.

Bei dem Ausführungsbeispiel nach Fig. 6 wird der Innenring 24 in die laserlichtdurchlässige Komponente 4 der O-Ringkappe eingesteckt. Die laserlichtundurchlässige Komponente 2 ist hieran den Innenring 24 angebracht. Der Laser dringt beim Schweißprozess durch die laserlichtdurchlässige Komponente 4 und schmilzt die Sperrschicht als laserlichtundurchlässige Komponente als Bestandteil des Innenrings 24 auf. Die entstehende Wärmeenergie schmilzt die Oberflächen der laserlichtdurchlässigen Komponente 4 in Form der O-Ringkappe, des Stützrohres 14 und des Filtermediums 8 auf. Beim Verfestigen des Schmelzbades entsteht zwischen den Komponenten dann eine Schweißverbindung. Bei dieser Anordnung der Komponenten ist die O-Ringkappe lasertransparent ausgeführt, der Innenring 24 hingegen laserabsorbierend. Die elektrische Ladung wird hier von dem Filtermedium 8 über das Stützrohr 14 an den Innenring 24 weitergeleitet, so dass diese Komponenten aus einem elektrisch leitfähigen Kunststoff hergestellt sind. Die untere Endkappe 26 muss lasertransparent aber nicht zwingend elektrisch leitfähig ausgebildet sein.

Bei der weiteren Ausführungsform gemäß Fig. 7 entfällt der Innenring 24, da hier das Stützrohr 14 in die als laserlichtdurchlässige Komponente 4 eingesteckt ist, wodurch sich der Aufnahmeraum 28 für einen O-Ring ausbildet. Am Stützrohr 14 ist eine laserlichtundurchlässige Komponente in Form der Sperrschicht aufgespritzt. Das Filtermedium 8 und das Stützrohr 14 sind aus einem elektrisch leitfähigen Material gebildet. Vom Stützrohr 14 wird die elektrische Ladung an den leitenden Stutzen 40 der Elementaufnahme 42 (s. Fig. 9, Fig. 10) abgeleitet. Die O-Ringkappe als laserlichtdurchlässige Komponente 4 sowie die am gegenüberliegenden stirnseitigen Ende des Filtermediums 8 angeordnete untere Endkappe 26 sind aus einem laserlichtdurchlässigen Material gebildet. Durch das Anspritzen der Sperrschicht an das Stützrohr 14 wird ein zusätzliches Einlegen einer Sperrschicht als separates Teil überflüssig, wodurch sich die Ausführung des Filterelements 20 gemäß der Darstellung in Fig. 7 als besonders wirtschaftlich erweist.

Auch bei der Ausführungsform nach Fig. 8 ist wie in Fig. 7 die Sperrschicht auf das Stützrohr 14 aufgespritzt, so dass auch hier das Einlegen eines separaten Teils als laserlichtundurchlässiger Sperrschicht entfällt. Der Laserstrahl durchdringt die laserlichtdurchlässige untere Endkappe 26 und schmilzt die Sperrschicht auf. Diese verbindet dann die untere Endkappe 26 mit dem Stützrohr 14 und dem Filtermedium 8. Die elektrische Ladung wird von dem Filtermedium 8 an das Stützrohr 14 weitergeleitet. Das Filtermedium 8 und das Stützrohr 14 werden aus einem elektrisch leitfähigen Kunststoff hergestellt.

Die in den verschiedenen Ausführungsbeispielen gezeigten Varianten zum Fügen der O-Ringkappe als laserlichtdurchlässige Komponente 4 bzw. der unteren Endkappe 26 können auch untereinander kombiniert werden. Zudem können die Varianten auch an einem Filterelement 20 mit außenliegendem Stützrohr (nicht gezeigt) angewendet werden. Optionsweise kann das Stützrohr in den Varianten auch zweiteilig gestaltet werden, um den Einbau des Filtermediums 8 zu gewährleisten. Hierzu bietet sich insbesondere an, das Stützrohr in axialer Richtung zweiteilig auszuführen. Wirtschaftlich besonders interessant ist eine Kombination der Ausführungsform nach Fig. 7 mit der Ausführungsform nach Fig. 8 mit direkt an das Stützrohr aufgespritzter Sperrschicht.

In den Figuren 9 und 10 sind für erfindungsgemäße Filtervorrichtungen 44 Elementaufnahmen 42 gezeigt, die jeweils einen leitenden Stutzen 40 aufweisen, der in leitende Verbindung mit einer Komponente des erfindungsgemäßen Filterelements 20 bringbar ist.

Bei der Ausführungsform nach Fig. 9 ist das Filtermedium 8 des Filterelements 20 in einem Stützrohr 14 angeordnet, und die O-Ringkappe 4 weist in Richtung des leitenden Stutzens 40 der Elementaufnahme 42 außenumfangsseitig umlaufend einen Aufnahmeraum 28 auf, in den ein O-Ring 30 eingesetzt ist. Dergestalt kann die im Bereich des O-Rings in Form eines Hohlstutzens ausgeführte O-Ringkappe 4 in dichtende Anlage an eine korrespondiere Ausnehmung des leitenden Stutzens 40 gebracht werden und gleichzeitig ein Ladungstransport von der O-Ringkappe 4 zum leitenden Stutzen 40 der Elementaufnahme 42 erfolgen.

Bei der Ausführungsform nach Fig. 10 ist das Filtermedium 8 auf ein koaxial innenliegendes Stützrohr 14 aufgebracht und das Stützrohr 14 weist seinerseits an seinem dem Stutzen 40 benachbarten Ende einen Aufnahmeraum 28 für einen O-Ring 30 auf. Im Gegensatz zum Ausführungsbeispiel nach Fig. 9 ist der Stutzen 40 der Elementaufnahme 42 hier nicht außen an der O-Ringkappe 4 angebracht, sondern durchdringt die O-Ringkappe 4, um gegen die Innenwand des Stützrohrs 14 in dichtende Anlage an den O-Ring 30 zu gelangen.

## Patentansprüche

1. Filterelement (20) zusammengesetzt aus einzelnen Komponenten (2, 4, 8, 14), wie einem Filtermedium (8) als die eine Komponente und weiteren Filterelementkomponenten (2, 4, 14), von denen zum Durchführen eines Durchstrahlschweißverfahrens mittels Laserlicht (12), zwecks Verbinden von zuordenbaren Filterelementkomponenten miteinander, zumindest eine Komponente (14) aus zumindest teilweise Laserlicht durchlässigem Kunststoffmaterial und mindestens eine weitere Komponente (2), in der Art einer Sperrschicht ausgebildet, aus zumindest teilweise Laserlicht undurchlässigem Material besteht, **dadurch gekennzeichnet, dass** diese eine Komponente (14) des Filterelements, die beim Durchstrahlschweißverfahren dem Laserlicht exponiert ist, zumindest teilweise elektrisch leitfähig ist, wobei zur Ausbildung der mindestens teilweisen elektrischen Leitfähigkeit diese Filterelementkomponente (14) zumindest bereichsweise aus einem Additive in Form von Carbon-Nanotubes und/oder Carbonfasern und/oder Stahlfasern aufweisenden Kunststoffmaterial gebildet ist.

2. Filterelement (20) nach Anspruch 1, **dadurch gekennzeichnet, dass** die Sperrschicht durch Absorption von Laserlicht Wärme erzeugt und zumindest teilweise als Verbindung gegenüber benachbart angrenzenden weiteren Filterelementkomponenten (4, 8) dient.

3. Filterelement (20) nach einem der vorhergehenden Ansprüche, **dadurch gekennzeichnet, dass** die Sperrschicht zumindest teilweise elektrisch leitfähig ist.

4. Filterelement (20) nach einem der vorhergehenden Ansprüche, **dadurch gekennzeichnet, dass** die Sperrschicht in Art einer Folie ausgebildet zwischen den mittels dem Durchstrahlschweißverfahren mittels Laserlicht (12) zu verbindenden Filterelementkomponenten (4, 8) eingelegt ist.

5. Filterelement (20) nach einem der vorhergehenden Ansprüche, **dadurch gekennzeichnet, dass** die Sperrschicht in Art einer Beschichtung ausgeführt mindestens abschnittsweise an einer der Komponenten (4, 14, 18, 24) des Filterelements (20) angeordnet ist, die miteinander zu verbinden sind.

6. Filterelement (20) nach einem der vorhergehenden Ansprüche, **dadurch gekennzeichnet, dass** das Filtermedium (8) zur Ableitung von Ladungen zumindest teilweise elektrisch leitfähig ist.

7. Filterelement (20) nach einem der vorhergehenden Ansprüche, **dadurch gekennzeichnet, dass** eine Filterelementkomponente (4) in der Art einer Endkappe einen Abschluss des Filterelements (20) an zumindest einem Ende bildet und aus zumindest teilweise Laserlicht durchlässigem Material bestehend beim Durchstrahlschweißverfahren dem Laserlicht (12) exponiert ist.

8. Filterelement (20) nach Anspruch 7, **dadurch gekennzeichnet, dass** die Endkappe zumindest teilweise elektrisch leitfähig ist.

9. Filterelement (20) nach einem der vorhergehenden Ansprüche, **dadurch gekennzeichnet, dass** zur Ausbildung des zumindest teilweise laserlichtundurchlässigen Materials mindestens eine der Filterelementkomponenten (2) zumindest bereichsweise aus einem ein Additiv in Form von Glasfasern aufweisenden Kunststoffmaterial gebildet ist.

10. Filtervorrichtung (44) aufweisend ein Filterelement (20) nach einem der vorhergehenden Ansprüche sowie mindestens eine zumindest teilweise elektrisch leitfähige Elementaufnahme (42), die fluiddicht mit mindestens einer Filterelementkomponente des Filterelements (20) verbindbar ist und die elektrisch leitfähig mit mindestens einer Filterkomponente des Filterelements (20) verbindbar ist.

## Claims

1. A filter element (20) composed of individual components (2, 4, 8, 14) such as a filter medium (8) as the one component and additional filter element components (2, 4, 14) of which at least one component (14) is made of plastic material which is at least partially transmissive to laser light, and at least one additional component (2), designed in the manner of a barrier layer, is made of a material that is at least partially non-transmissive to laser light in order to carry out a transmission welding process by means of laser light (12) for the purpose of connecting associable filter element components to one another, **characterised in that** this one component (14) of the filter element, which is exposed to the laser light during the transmission welding process, is at least partially electrically conductive, this filter element component (14) being formed at least in certain regions from an additive in the form of plastic material comprising carbon nanotubes and/or carbon fibres and/or steel fibres in order to produce the at least partial electrical conductivity.

2. The filter element (20) according to Claim 1, **characterised in that** the barrier layer generates heat due to the absorption of laser light and serves at least partially as a bond relative to adjacent adjoining additional filter element components (4, 8).

3. The filter element (20) according to any of the preceding claims, **characterised in that** the barrier layer is at least partially electrically conductive.

4. The filter element (20) according to any of the preceding claims, **characterised in that** the barrier layer, designed in the manner of a film, is inserted between the filter element components (4, 8) that are to be connected by means of laser light (12) by the transmission welding process.

5. The filter element (20) according to any of the preceding claims, **characterised in that** the barrier layer, designed in the manner of a coating, is disposed at least in sections on one of the components (4, 14, 18, 24) of the filter element (20) that are to be connected to one another.

6. The filter element (20) according to any of the preceding claims, **characterised in that** the filter medium (8) is at least partially electrically conductive in order to dissipate charges.

7. The filter element (20) according to any of the preceding claims, **characterised in that** a filter element component (4) forms in the manner of an end cap a closure of the filter element (20) on at least one end and, being made of a material that is at least partially transmissive to laser light, is exposed to the laser light (12) during the transmission welding process.

8. The filter element (20) according to Claim 7, **characterised in that** the end cap is at least partially electrically conductive.

9. The filter element (20) according to any of the preceding claims, **characterised in that** at least one of the filter element components (2) is made at least in certain regions of a plastic material which has an additive in the form of glass fibres, for the purpose of forming the material that is at least partially non-transmissive to laser light.

10. A filter device (44) comprising a filter element (20) according to any of the preceding claims and at least one element receptacle (42) which is at least partially electrically conductive, and which can be connected in a fluid-tight manner to at least one filter element component of the filter element (20) and can be connected in an electrically conductive manner to at least one filter component of the filter element (20).

## Revendications

1. Elément (20) filtrant composé de composants (2, 4, 8, 14) individuels, comme un milieu (8) filtrant, en tant que l'un des composants et d'autres composants (2, 4, 14) d'élément filtrant, parmi lesquels, pour effectuer un procédé de soudage par rayonnement au moyen de lumière (12) laser en vue de relier des composants d'élément filtrant pouvant être associés les uns aux autres, au moins un composant (14) est en une matière plastique transparente, au moins en partie, à la lumière laser et au moins un autre composant (2), constitué à la manière d'une couche d'arrêt, est en une matière, au moins en partie, non transparente à la lumière laser, **caractérisé en ce qu'**un composant (14) d'élément filtrant, qui est soumis à la lumière laser dans le procédé de soudage par rayonnement est, au moins en partie, conducteur de l'électricité, dans lequel, pour avoir la conductivité électrique au moins en partie, ce composant (14) d'élément filtrant est formé, au moins par endroit, d'une matière plastique ayant des additifs sous la forme de nanotubes de carbone et/ou de fibres de carbone et/ou de fibres d'acier.

2. Elément (20) filtrant suivant la revendication 1, **caractérisé en ce que** la couche d'arrêt produit de la chaleur par absorption de lumière laser et sert, au moins en partie, de liaison par rapport à d'autres composants (4, 8) d'élément filtrant voisins.

3. Elément (20) filtrant suivant l'une des revendications précédentes, **caractérisé en ce que** la couche d'arrêt est, au moins en partie, conductrice de l'électricité.

4. Elément (20) filtrant suivant l'une des revendications précédentes, **caractérisé en ce que** la couche d'arrêt constituée à la manière d'une feuille est insérée entre les composants (4, 8) de l'élément filtrant à relier au moyen du procédé de soudage par rayonnement à l'aide de lumières (12) laser.

5. Elément (20) filtrant suivant l'une des revendications précédentes, **caractérisé en ce que** la couche d'arrêt réalisée à la manière d'un revêtement est disposée, au moins par endroit, sur l'un des composants (4, 14, 18, 24) de l'élément (20) filtrant, qui doivent être reliés les uns aux autres.

6. Elément (20) filtrant suivant l'une des revendications précédentes, **caractérisé en ce que** le milieu (8) filtrant est, pour l'évacuation de charges, conducteur de l'électricité au moins en partie.

7. Elément (20) filtrant suivant l'une des revendications précédentes, **caractérisé en ce qu'**un composant (4) de l'élément filtrant forme, à la manière d'une coiffe d'extrémité, une fermeture de l'élément (20) filtrant à au moins une extrémité et, en étant en une matière au moins en partie transparente à la lumière laser, est exposée à la lumière (12) laser lors du procédé de soudage par rayonnement.

8. Elément (20) filtrant suivant la revendication 7, **caractérisé en ce que** la coiffe d'extrémité est, au moins en partie, conductrice de l'électricité.

9. Elément (20) filtrant suivant l'une des revendications précédentes, **caractérisé en ce que**, pour la constitution de la matière, au moins en partie, non transparente à la lumière laser au moins l'un des composants (2) de l'élément filtrant est formé par endroit d'une matière plastique ayant un additif sous la forme de fibres de verre.

10. Dispositif (44) de filtration, ayant un élément (20) filtrant suivant l'une des revendications précédentes, ainsi qu'au moins un logement (42) au moins en partie conducteur de l'électricité de l'élément, qui peut être relié d'une manière étanche au fluide à au moins l'un des composants de l'élément (20) filtrant et qui peut être relié d'une manière conductrice de l'électricité à au moins un composant de l'élément (20) filtrant.
